(19) Europäisches Patentamt
European Patent Office
Office européen des brevets

(11) **EP 2 179 834 B1**

(12) **EUROPEAN PATENT SPECIFICATION**

(45) Date of publication and mention of the grant of the patent:
**11.07.2018 Bulletin 2018/28**

(51) Int Cl.:
**B29C 47/08** *(2006.01)*   **B30B 11/24** *(2006.01)*

(21) Application number: **09172510.1**

(22) Date of filing: **08.10.2009**

(54) **Power transmission structure and two-shaft mixer/extruder comprising such power transmission structure**

Leistungsübertragungsstruktur und Mischgerät bzw. Extruder mit zwei Schäften mit einer solchen Leistungsübertragungsstruktur

Structure de transmission de puissance et mélangeur/extrudeuse à deux arbres comprenant une telle structure de transmission de puissance

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.10.2008 JP 2008270679**

(43) Date of publication of application:
**28.04.2010 Bulletin 2010/17**

(73) Proprietor: **Kabushiki Kaisha Kobe Seiko Sho (Kobe Steel, Ltd.)**
**Kobe-shi,**
**Hyogo 651-8585 (JP)**

(72) Inventors:
• **Nakashita, Tomonori**
**Kobe-shi, Hyogo 651-2271 (JP)**
• **Honke, Koichi**
**Kobe-shi, Hyogo 651-2271 (JP)**
• **Kasai, Shigehiro**
**Takasago-shi, Hyogo 676-8670 (JP)**
• **Minagawa, Koji**
**Takasago-shi, Hyogo 676-8670 (JP)**

(74) Representative: **TBK**
**Bavariaring 4-6**
**80336 München (DE)**

(56) References cited:
**AU-A1- 2007 277 971     CH-A- 444 470**
**DE-A1-102005 061 936     JP-A- 62 127 517**
**US-A- 5 874 682**

**Description**

BACKGROUND OF THE INVENTION

The present invention relates to a power transmission structure for a two-shaft mixer/extruder and a two-shaft mixer/extruder comprising such a power transmission structure.

DESCRIPTION OF THE RELATED ART.

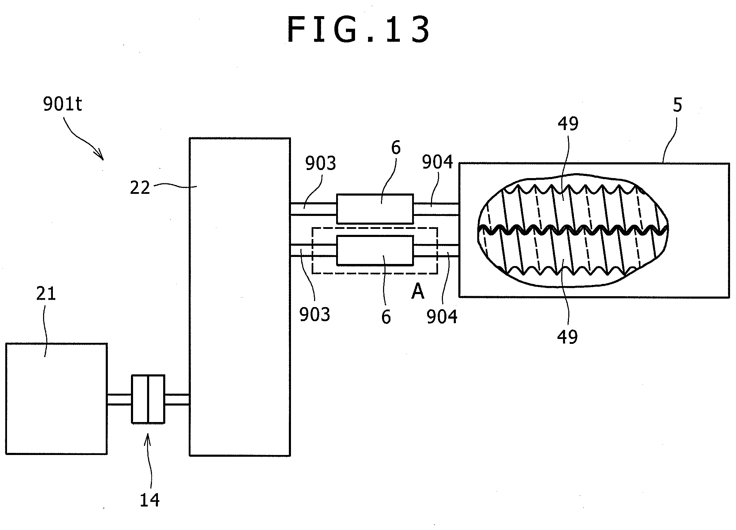

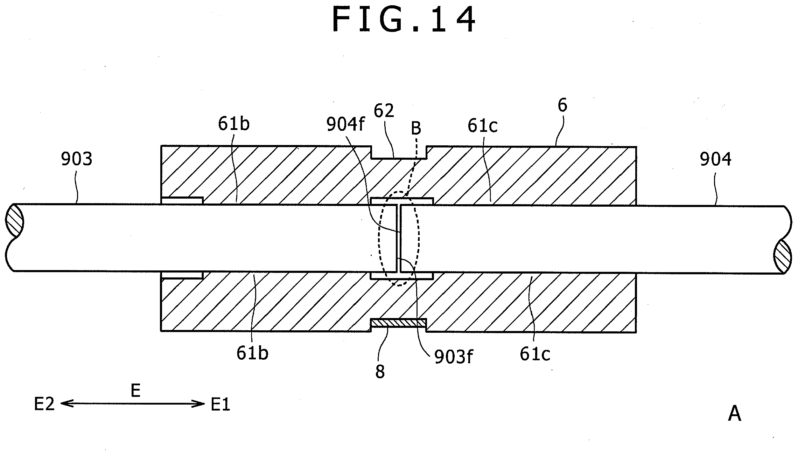

A description will be given to a structure of a conventional two-shaft extruder with using Figs. 13 and 14. In a two-shaft mixer/extruder 901t, mechanical power generated by a motor 21 is transmitted to two output shafts 903 through a transmission device 22. Rotational force of the output shafts 903 is transmitted to screw shafts 904 by sleeves 6 respectively. Screws 49 attached to the screw shafts 904 respectively are rotated so that a material supplied into an extruder housing 5 is mixed and extruded by the two screws 49.

A plurality of convex splines 61b and a plurality of convex splines 61c are formed inside the sleeve 6. The convex splines 61b are fitted into concave splines formed on the output shaft 903 respectively, and the convex splines 61c are fitted into concave splines formed on the screw shaft 904 respectively. By such a structure, the rotational force of the output shafts 903 is transmitted to the sleeves 6 via the convex splines 61b, and the rotational force transmitted to the sleeves 6 is transmitted to the screw shafts 904 via the convex splines 61c.

In such a two-shaft mixer/extruder, there are a case where a material to be mixed is not sufficiently melt and a case where a material which is not easily mixed is used. In such a case, when the output shafts 903 are rotated, the screws 49 act as resistance against rotation. Therefore, large torque (torsional moment) is imposed on the screw shafts 904. Consequently, there is a need for constantly measuring the torque to be applied on the screw shafts 904 so that the torque larger than an allowable value is not imposed on the screw shafts 904.

A strain gauge 8 serving as a torque measurement sensor is attached onto a surface of the sleeve 6. A surface shear strain on the sleeve 6 is measured by the strain gauge 8, and the torque of the screw shaft 904 is calculated from a value of the surface shear strain. US Patent No. 5874682 discloses an example of such a device.

In the conventional device as described above, the output shaft 903 and the screw shaft 904 are splined to the sleeve 6. Therefore, the screw shaft 904 can be moved along the axial direction relative to the sleeve 6. In the two-shaft mixer/extruder 901t, in a case where the material to be mixed is not sufficiently melt or in a case where the material which is not easily mixed is used, the screw shaft 904 receives large force (thrust force) at the time of mixing the material so as to be sometimes moved toward the output shaft 903 along the axial direction. At the time, an end surface 903f of the output shaft 903 is brought in contact with an end surface 904f of the screw shaft 904 (refer to a broken line part B in Fig. 14). Here, the end surface 903f of the output shaft 903 and the end surface 904f of the screw shaft 904 are flat surfaces.

Essentially, the torque to be measured by using the strain gauge 8 is a difference between the rotational force (drive force) of the output shaft 903 and the rotational force of the screw 49. However, in a case where the end surface 903f of the output shaft 903 is brought in contact with the end surface 904f of the screw shaft 904, friction torque is generated between the output shaft 903 and the screw shaft 904. Therefore, it is not possible to measure an accurate value of the torque. That is, the problem is that an amount determined by subtracting loss due to the friction torque from the essential torque is measured as the torque of the screw shaft.

Furthermore, a power transmission structure according to the preamble of claim 1 is known from DE 10 2005 061936 A1. Further power transmission structures are known from AU 2007 277 971 A1, CH 444 470 A, JP 62 127517 A and US 5 874 682 A.

SUMMARY OF THE INVENTION

An object of the present invention is to provide a power transmission structure for a two-shaft mixer/extruder capable of accurately transferring torque imposed on a screw shaft, and a two-shaft mixer/extruder comprising such a power transmission structure. According to the present invention, the above object is solved with a power transmission structure having the features of claim 1.

In this configuration, when a strain sensor is attached to the sleeve so as to measure a strain on the sleeve, it is possible to measure the torque imposed on the screw shaft as disclosed in claim 2. The intermediate member is sandwiched between the output shaft and the screw shaft inside the sleeve, and the curved surface protruding toward the end of the output shaft and the curved surface protruding toward the end of the screw shaft are formed on the intermediate member. A contact area between the intermediate member and the two shafts is small. Therefore, in comparison with a case where a flat end surface of the output shaft is brought into contact with a flat end surface of the screw shaft, it is possible to reduce friction torque generated between the output shaft and the screw shaft.

As mentioned above, since measurement loss due to the friction torque is reduced, it is possible to accurately measure the torque imposed on the screw shaft.

It should be noted that as splining means concave splines may be formed on one of (i) the output shaft and the screw shaft and (ii) the sleeve along the axial direction, convex splines may be formed on the other along the axial direction, and the convex splines may be fitted into the concave splines so as to fit (i) and (ii) into each other.

For example, a spherical body or an oval body may be utilized as the intermediate member. A material of the intermediate member may be metal or synthetic resin. A material having strength for bearing a load to be actually imposed and a small friction coefficient is desirable as the material of the intermediate member.

A two-shaft mixer/extruder according to the present invention comprises two power transmission structures according to claim 1, and a strain sensor is arranged on an outer circumference of the sleeve.

In this configuration, the measurement loss due to the friction torque is reduced, it is possible to accurately measure the torque imposed on the screw shaft. It should be noted that a strain gauge or the like can be utilized as the strain sensor.

As described above, in the present invention, the contact area between the members between the output shaft and the screw shaft is desirably small. Therefore, (i) contact between a flat surface and a curved surface or (ii) contact between a curved surface and a curved surface is desirably performed between the output shaft and the screw shaft.

BRIEF DESCRIPTION OF THE DRAWINGS

[Fig. 1] A schematic view showing an entire configuration of a two-shaft mixer/extruder according to a first embodiment of the present invention.

[Fig. 2] A schematic sectional view of a power transmission structure.

[Fig. 3] A schematic sectional view of the power transmission structure.

[Fig. 4] A schematic view of an intermediate member: Fig. 4A is an enlarged sectional view of a spherical body and a periphery according to the first embodiment; Fig. 4B is a side view of an intermediate member according to a first modification; Fig. 4C is a side view of an intermediate member according to a second modification; and Fig. 4D is a side view of an intermediate member according to a third modification.

[Fig. 5] A view showing a first explanatory example, not in accordance with the invention: Fig. 5A is a side view of a power transmission structure; and Fig. 5B is a side view showing a modification of a bolt.

[Fig. 6] A side view showing a second explanatory example, not in accordance with the invention.

[Fig. 7] A side view of a screw shaft according to a third explanatory example, not in accordance with the invention: Fig. 7A shows a state after a first processing process; and Fig. 7B shows a state after a second processing process.

[Fig. 8] A schematic sectional view of a power transmission structure according to a fourth explanatory example, not in accordance with the invention.

[Fig. 9] A supplementary illustrative view for calculation of working examples.

[Fig. 10] A graph showing a calculation result of a working example A1.

[Fig. 11] A graph showing a calculation result of a working example A2.

[Fig. 12] A graph showing a calculation result of a working example A3.

[Fig. 13] A schematic view showing an entire configuration of a conventional two-shaft mixer/extruder.

[Fig. 14] A schematic sectional view of a conventional power transmission structure.

DESCRIPTION OF THE PREFERRED EMBODIMENTS

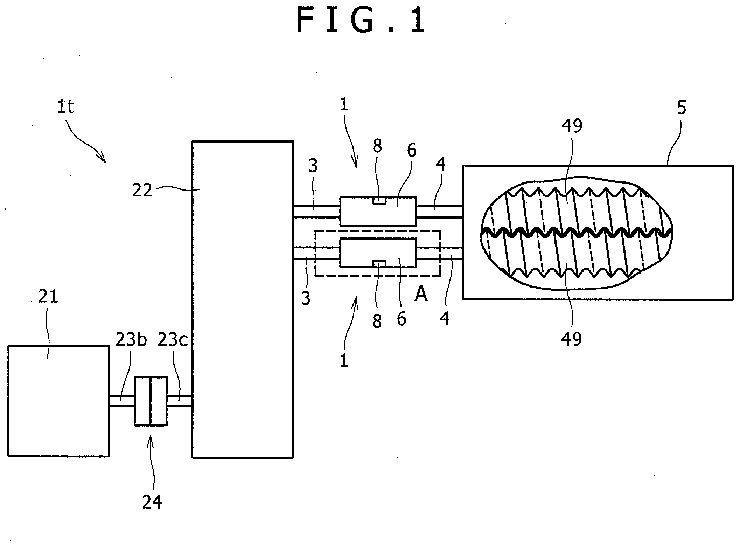

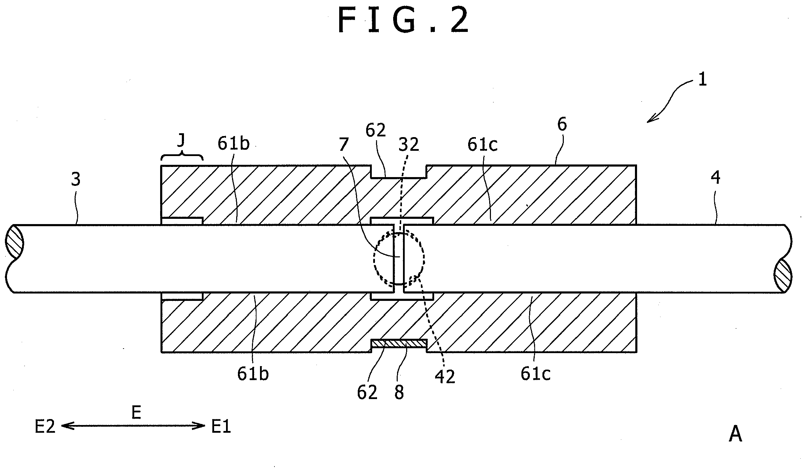

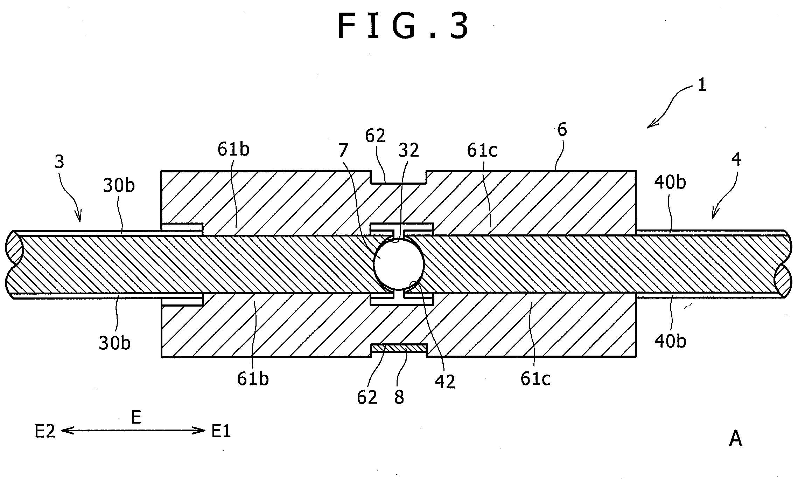

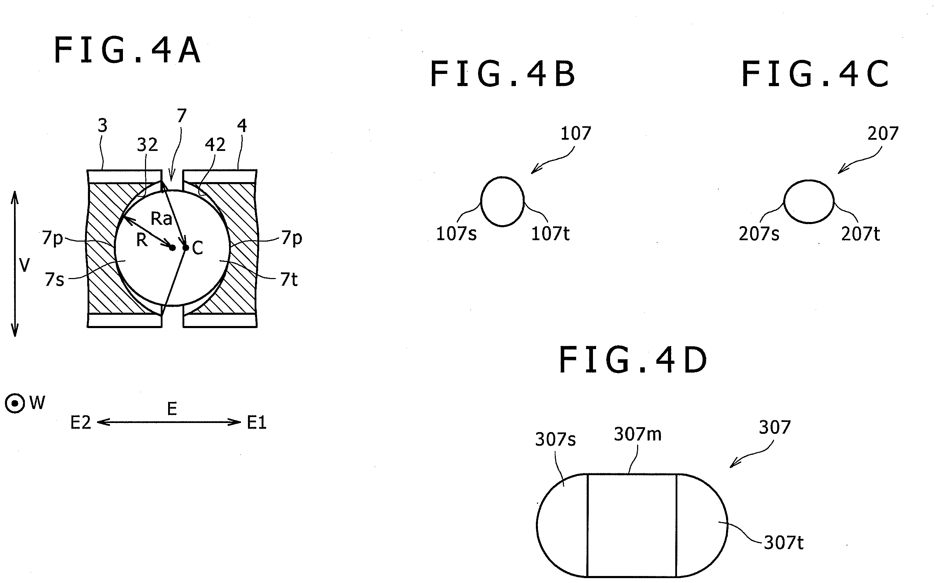

Hereinafter, a description will be given to a first embodiment of the present invention with reference to the drawings. Fig. 1 is a schematic view showing an entire configuration of a two-shaft mixer/extruder according to the first embodiment of the present invention. Fig. 2 is a schematic sectional view of a power transmission structure. Fig. 3 is a schematic sectional view of the power transmission structure. Fig. 4 is a schematic view of an intermediate member, and Fig. 4A is an enlarged sectional view of a spherical body and a periphery according to the first embodiment. It should be noted that Figs. 2 and 3 show a section of an Apart in Fig. 1.

(Entire Configuration)

Firstly, a description will be given to the entire configuration of a two-shaft mixer/extruder 1t with using Fig. 1. The two-shaft mixer/extruder 1t has a motor 21, a power shaft 23b, a clutch 24, a power shaft 23c, a transmission device (reducer) 22, two power transmission structures 1, two strain gauges 8, two screws 49 and an extruder housing 5. Each of the power transmission structures 1 has an output shaft 3, a screw shaft 4, a sleeve 6 and a spherical body 7 (refer to Fig. 2).

Power generated by the motor 21 is transmitted to the transmission device 22 by the power shaft 23b, the clutch 24 and the power shaft 23c. The mechanical power transmitted to the transmission device 22 is transmitted to the two output shafts 3. Rotational force of each of the output shaft 3 is transmitted to the screw shaft 4 by the sleeve 6. The screws 49 attached to the screw shafts 4 respectively are rotated, and a material (not shown) supplied into the extruder housing 5 is mixed and extruded in a predetermined shape by the two screws 49. The two screws 49 are a meshing type, and the rotational directions of the two screws 49 are the same direction. It should be noted that the screws may be a non-meshing type, and the rotational directions of the two screws may be different directions.

One strain gauge 8 is attached to a surface of each of the sleeve 6. An amplifier and a transmitting antenna (not shown) are attached to each of the sleeve 6. The strain gauge 8 is electrically connected to the amplifier and the transmitting antenna. The transmitting antenna receives electrical signal sent from the strain gauge 8 and transmits this signal as electromagnetic wave. A receiving antenna (not shown) is installed in the vicinity of the sleeve 6, and the receiving antenna receives the electromagnetic wave transmitted from the transmitting antenna. The signal is sent to a computer (not shown).

(Power Transmission Structure)

A description will be given to a structure of the power transmission structure 1 with using Figs. 2 and 3. It should be noted that not the sectional view but the side view of the output shaft 3, the screw shaft 4 and the spherical body 7 is shown in Fig. 2. And the sectional view of all the members except the spherical body 7 is shown in Fig. 3.

As mentioned above, the two-shaft mixer/extruder 1t includes the two power transmission structures 1. Since the two power transmission structures 1 are configured in a similar way, hereinafter, a description will be given to one of the power transmission structures 1 and a description of the other will be omitted.

The power transmission structure 1 has the output shaft 3, the screw shaft 4, the sleeve 6 and the spherical body (an intermediate member) 7. All are made of metal.

An axis line of the output shaft 3 and an axis line of the screw shaft 4 are positioned on the same straight line. That is, the output shaft 3 and the screw shaft 4 are arranged along the axial direction (refer to the arrow E direction in Fig. 2). Hereinafter, with reference to the axial direction E, the side of the screw shaft 4 is referred to as the E1 side, and the side of the output shaft 3 is referred to as the E2 side (refer to Fig. 2).

The output shaft 3 is rotated by the rotational force transmitted from the motor (a power source) 21. The screw 49 for mixing the material is attached on the E1 side of the screw shaft 4.

A recess portion 32 is formed on an end on the E1 side of the output shaft 3. The recess portion 32 is dented toward the E2 side along the axial direction E. A surface of the recess portion 32 is formed in a semi-spherical shape as a part of a spherical surface having a radius Ra (refer to Fig. 4A). In Fig. 4A, a center of the spherical surface including the surface of the recess portion 32 is shown as a point C.

A recess portion 42 is formed on an end on the E2 side of the screw shaft 4. The recess portion 42 is dented toward the E1 side along the axial direction E. A surface of the recess portion 42 is formed in a semi-spherical shape as a part of the spherical surface having the radius Ra as well as the recess portion 32.

The sleeve 6 is formed in a cylindrical shape and attached to an outer circumference of the end of the output shaft 3 and an outer circumference of the end of the screw shaft 4. The output shaft 3 and the screw shaft 4 are coupled to each other by the sleeve 6. As described later, the rotational force of the output shaft 3 is transmitted to the screw shaft 4 by the sleeve 6.

A curved surface 7s formed toward the end of the output shaft 3 and a curved surface 7t protruding toward the end of the screw shaft 4 are formed on the spherical body (the intermediate member) 7 (refer to Fig. 4A). The curved surface 7s protrudes to the E2 side along the axial direction E, and the curved surface 7t protrudes to the E1 side along the axial direction E.

The spherical body 7 is arranged inside the sleeve 6. The spherical body 7 is sandwiched between the output shaft 3 and the screw shaft 4. Specifically, the spherical body 7 is fitted into both the recess portion 32 and the recess portion 42 in the power transmission structure 1.

A radius of the spherical body 7 is R (refer to Fig. 4A). The radius R of the spherical body 7 is smaller than the radius Ra. Therefore, when the spherical body 7 is sandwiched by the output shaft 3 and the screw shaft 4, a part of the spherical body 7 brought into contact with the output shaft 3 and the screw shaft 4 is a part shown by two points 7p in Fig. 4A. That is, the output shaft 3 and the screw shaft 4 are brought into contact with the spherical body 7 at the two points 7p. Therefore, an area where the curved surface 7s is brought in contact with a surface of the recess portion 32 and an area where the curved surface 7t is brought in contact with a surface of the recess portion 42 are smaller than an area where an end surface 903f is brought in contact with an end surface 904f.

The spherical body 7 cannot be moved in all the directions when the spherical body 7 is sandwiched between the output shaft 3 and the screw shaft 4.

It should be noted that in the power transmission structure 1 according to the present embodiment, since the surfaces of the recess portion 32 and the recess portion 42 are formed as a part of the spherical surface, the spherical body 7 cannot be moved in all the directions. However, a shape of the recess portions is not limited to this but the spherical body 7 may be moved only in the width direction W (the direction perpendicular to both the axial direction E and the up and down direction V; refer to Fig. 4A). That is, the surfaces of the recess portions may be formed as a part of a side surface of a column whose axial direction is along the width direction G. Alternatively, the recess portion 32 and the recess portion 42 may be not formed, and the ends of the output shaft and the screw shaft may be flat surfaces.

As shown in Fig. 3, a plurality of concave splines 30b is formed on the output shaft 3 along the axial direction E. A plurality of concave splines 40b is formed on the screw shaft 4 along the axial direction E. A plurality of convex splines 61b and a plurality of convex splines 61c are formed inside the sleeve 6 along the axial direction E.

The output shaft 3 and the screw shaft 4 are splined to the sleeve 6. That is, the convex splines 61b are fitted into the concave splines 30b formed on the output shaft 3 respectively, and the convex splines 61c are fitted into the concave splines 40b formed on the screw shaft 4 respectively (refer to Fig. 3).

Since the output shaft 3 and the screw shaft 4 are splined to the sleeve 6 in such a way, the rotational force of the output shaft 3 is transmitted to the sleeve 6 via the convex splines 61b, and the rotational force transmitted to the sleeve 6 is transmitted to the screw shaft 4 via the convex splines 61c.

A region where no convex splines are formed inside (an axial directional area) is formed inside an end of the sleeve 6 (an end on the E2 side) (refer to a J region in Fig. 2). The J region is not easily strained as not easily influenced by the torque. The amplifier and the transmitting antenna are arranged in this J region.

A circumferential groove 62 is formed on the sleeve 6 along the circumferential direction of the output shaft 3 and the screw shaft 4. One strain gauge 8 serving as a torque measurement sensor is attached to a surface of the circumferential groove 62. Surface shear strain of the sleeve 6 is measured by the strain gauge 8. The torque imposed on the screw shaft 4 is calculated on the computer by using a measurement value of the surface shear strain.

In such a two-shaft mixer/extruder, since installation space for the strain gauge is generally small, it is difficult to directly attach the sensor to the screw shaft 4. Therefore, in the two-shaft mixer/extruder 1t, the strain gauge 8 is attached to the surface of the sleeve 6.

When the strain gauge 8 is directly attached to the screw shaft 4, there is a need for an attachment work of measurement devices including the amplifier and the transmitting antenna at the time of assembling the extruder. Therefore, the assembling work is complicated.

Meanwhile, in the present configuration, the amplifier, the transmitting antenna and the strain gauge 8 are attached to the sleeve 6. Therefore, it is possible to commercialize the sleeve integral with the measurement devices so as to simplify the assembling work of the two-shaft mixer/extruder 1t.

The output shaft 3 and the screw shaft 4 are splined to the sleeve 6. Therefore, the screw shaft 4 can be moved along the axial direction E relative to the sleeve 6. In the two-shaft mixer/extruder 1t, the screw shaft 4 receives large force (thrust force) at the time of mixing the material so as to be sometimes moved toward the E2 side along the axial direction E. Even in this case, the output shaft 3 and the screw shaft 4 are brought in contact with the spherical body 7 at the two points 7p. Therefore, friction torque generated between the output shaft 3 and the screw shaft 4 is smaller than a case where the end surface 903f is brought in contact with the end surface 904f.

(Effect)

Next, a description will be given to an effect obtained by the power transmission structure 1 and the two-shaft mixer/extruder 1t according to the present embodiment. The power transmission structure 1 is provided with the output shaft 3 rotated by the rotational force transmitted from the motor (the power source) 21, the screw shaft 4 attached with the screw 49 for mixing the material, the cylindrical sleeve 6 for transmitting the rotational force of the output shaft 3 to the screw shaft 4, the cylindrical sleeve 6 being attached to the outer circumference of the end of the output shaft 3 and the outer circumference of the end of the screw shaft 4, and the spherical body (the intermediate member) 7 sandwiched between the output shaft 3 and the screw shaft 4 inside the sleeve 6. The output shaft 3 and the screw shaft 4 are splined to the sleeve 6, the axis line of the output shaft 3 and the axis line of the screw shaft 4 are positioned on the same straight line, and the curved surface 7s protruding toward the end of the output shaft 3 and the curved surface 7t protruding toward the end of the screw shaft 4 are formed on the spherical body 7.

In this configuration, since the strain gauge 8 is attached to the sleeve 6 so as to measure the strain on the sleeve 6, it is possible to measure the torque imposed on the screw shaft 4. The spherical body 7 is sandwiched between the output shaft 3 and the screw shaft 4 inside the sleeve 6, and the curved surface 7s protruding toward the end of the output shaft 3 and the curved surface 7t protruding toward the end of the screw shaft 4 are formed on the spherical body 7. A contact area between the spherical body 7 and the two shafts (the output shaft 3 and the screw shaft 4) is small. Therefore, in comparison with a case where a flat end surface of an output shaft 903 (the end surface 903f) is brought into contact with a flat end surface of a screw shaft 904 (the end surface 904f), it is possible to reduce the friction torque generated between the output shaft 3 and the screw shaft 4.

As mentioned above, since measurement loss due to the friction torque is reduced, it is possible to accurately measure the torque imposed on the screw shaft 4.

The two-shaft mixer/extruder 1t is provided with the two power transmission structures 1, and the strain gauge 8 is arranged on an outer circumference of each of the sleeves 6.

In this configuration, the measurement loss due to the friction torque is reduced, it is possible to accurately measure the torque imposed on the screw shaft 4.

In the present embodiment, measurement accuracy of the torque imposed on the screw shaft 4 can be enhanced by applying a simple design change to the shafts used in the conventional power transmission structure (the output shaft 903 and the screw shaft 904). Thereby, it is possible to more surely prevent breakage of the two-shaft mixer/extruder.

(Modifications)

Next, a description will be given to modifications of the first embodiment, mainly to parts different from the above embodiment. Fig. 4 is the schematic view of the intermediate member: Fig. 4B is a side view of an intermediate member according to a first modification; Fig. 4C is a side view of an intermediate member according to a second modification; and Fig. 4D is a side view of an intermediate member according to a third modification.

An intermediate member 107 according to the first modification is an oval body (refer to Fig. 4B). The long axis direction of the intermediate member 107 is equal to the up and down direction V in a side view. A curved surface 107s and a curved surface 107t are formed on the E2 side and the E1 side of the intermediate member 107 respectively. The curved surface 107s and the curved surface 107t protrude along the axial direction E. The intermediate member may be formed as above.

An intermediate member 207 according to the second modification is also an oval body (refer to Fig. 4C). The short axis direction of the intermediate member 207 is equal to the up and down direction V in a side view. A curved surface 207s and a curved surface 207t are formed on the E2 side and the E1 side of the intermediate member 207 respectively. The curved surface 207s and the curved surface 207t protrude along the axial direction E. The intermediate member may be formed as above.

An intermediate member 307 according to the third modification is a columnar body. A curved surface 307s protruding toward the end of the output shaft 3 and a curved surface 307t protruding toward the end of the screw shaft 4 are formed on both the ends on the E2 side and the E1 side of the intermediate member 307 respectively. The curved surface 307s and the curved surface 307t protrude along the axial direction E. The intermediate member may be formed as above.

(First explanatory example)

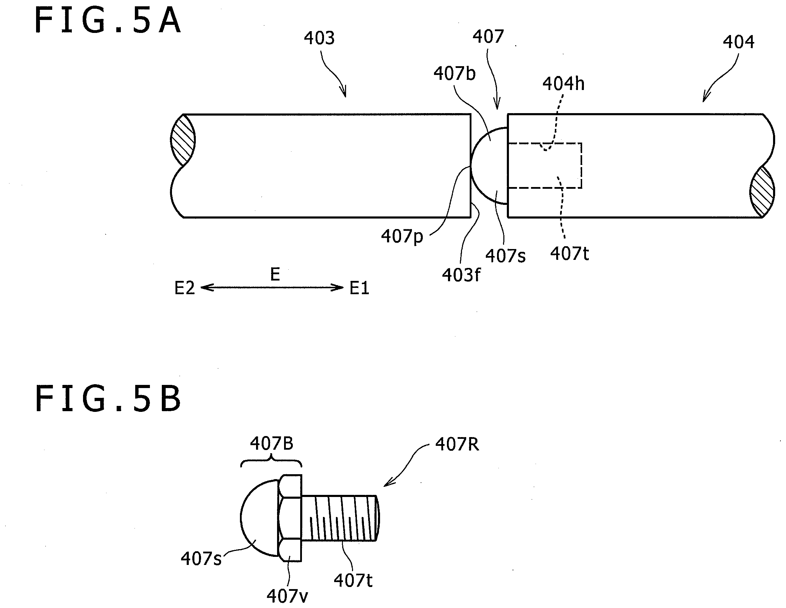

Next, a description will be given to a first explanatory example, mainly to parts different from the first embodiment. It should be noted that the same parts as the above embodiment will be given the same reference numerals in the drawings and a description of the parts will be omitted. Fig. 5 is a drawing showing the first explanatory example: Fig. 5A is a side view of a power transmission structure; and Fig. 5B is a side view showing a modification of a bolt. It should be noted that the sleeve 6 is omitted in Fig. 5A.

In the power transmission structure according the present explanatory example, a bolt 407 is provided instead of the spherical body 7. The bolt 407 is formed by a head portion 407b and a shaft portion 407t, and a screw thread is formed on the shaft portion 407t.

A flat end surface 403f is formed on an end of an output shaft 403. A screw hole 404h is formed on an end of a screw shaft 404. The shaft portion 407t is fitted into the screw hole 404h. That is, the bolt 407 is attached to the end of the screw shaft 404.

In the power transmission structure, an axis line of the output shaft 403, an axis line of the screw shaft 404 and an axis line of the bolt 407 are positioned on the same straight line. That is, the bolt 407 is attached to the screw shaft 404 so that the shaft portion 407t is placed along the axial direction E. The head portion 407b is formed in a semi-spherical shape, and a curved surface 407s protruding toward the end surface 403f of the output shaft 403 is formed on the head portion 407b. The curved surface 407s protrudes along the axial direction E. The output shaft 403 is brought in contact with the bolt 407 at a point 407p.

(Effect)

The power transmission structure according to the present explanatory example is provided with the output shaft 403 rotated by the rotational force transmitted from the motor 21, the screw shaft 404 attached with the screw for mixing the material, the cylindrical sleeve 6 for transmitting the rotational force of the output shaft 403 to the screw shaft 404, the cylindrical sleeve 6 being attached to an outer circumference of the end of the output shaft 403 and an outer circumference of the end of the screw shaft 404, and the bolt 407 attached to the end of the screw shaft 404. The output shaft 403 and the screw shaft 404 are splined to the sleeve 6, the axis line of the output shaft 403, the axis line of the screw shaft 404 and the axis line of the bolt 407 are positioned on the same straight line, and the curved surface 407s protruding toward the end of the output shaft 403 (the end surface 403f) is formed on the head portion 407b of the bolt 407.

In this configuration, since the strain gauge 8 is attached to the sleeve 6 so as to measure the strain on the sleeve 6, it is possible to measure the torque imposed on the screw shaft 404. The bolt 407 is attached to the end of the screw shaft 404, and the curved surface 407s protruding toward the end of the output shaft 403 is formed on the head portion 407b of the bolt 407. A contact area between the head portion 407b of the bolt 407 and the output shaft 403 is small. Therefore, in comparison with a case where the flat end surface of the output shaft is brought into contact with the flat end surface of the screw shaft, it is possible to reduce the friction torque generated between the output shaft 403 and the screw shaft 404.

As mentioned above, since the measurement loss due to the friction torque is reduced, it is possible to accurately measure the torque imposed on the screw shaft 404.

In the present explanatory example, the intermediate member such as the spherical body 7 is not required. Therefore, there is no need for forming the recess portion 32 and the recess portion 42 on the output shaft and the screw shaft. In comparison with formation of the recess portion 32 and the recess portion 42, the screw hole 404h is easily formed. Therefore, it is possible to further reduce processing cost and shorten a processing time in comparison with the first embodiment.

In the first embodiment, there is a need for positioning the spherical body 7 between the output shaft 3 and the screw shaft 4 at the time of assembling the power transmission structure 1. In the present explanatory example, since the bolt 407 is preliminarily attached to the screw shaft 404, the power transmission structure can be easily assembled.

It should be noted that the bolt may be attached to the output shaft or the ends of both the output shaft and the screw shaft.

The bolt may be formed as a bolt 407R shown in Fig. 5B. The bolt 407R has a head portion 407B and the shaft portion 407t, and a screw thread is formed on the shaft portion 407t. The head portion 407B includes a front end part in which the curved surface 407s is formed and a hexagonally columnar part 407v. The hexagonally columnar part 407v is formed on the E1 side of the front end part (on the side of the shaft portion 407t). The curved surface 407s protrudes toward the end surface 403f of the output shaft 403 along the axial direction E. A spanner surface for a fastening work by using a spanner is formed on a periphery of the hexagonally columnar part 407v.

For example, when a hexagonal hole (a hexagonal hole to be used at the time of the fastening work by using a hexagonal spanner) is formed on the head portion of the bolt, a sharp edge part is created so that the contact area between the output shaft 403 and the bolt is extremely reduced. Therefore, the friction torque generated between the output shaft 403 and the screw shaft 404 is excessively increased.

Meanwhile, in the present explanatory example (and the modification), a surface shape of the head portion of the bolt 407 and the bolt 407R is a curved surface at least in a part to be brought in contact with the output shaft 403. Therefore, the friction torque generated between the output shaft 403 and the screw shaft 404 is relatively small.

(Second explanatory example)

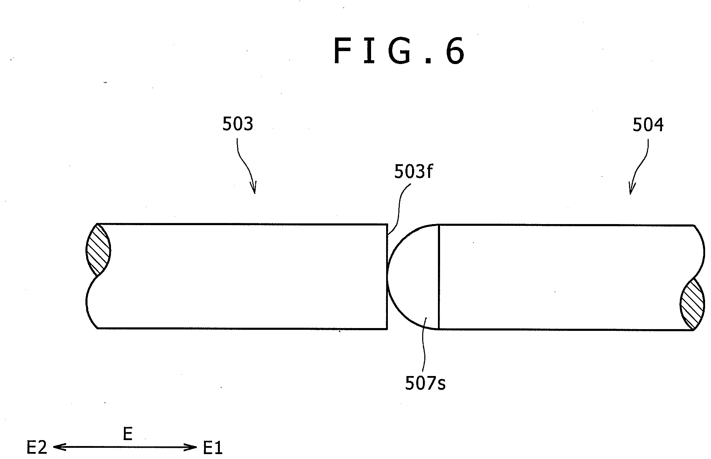

Next, a description will be given to a second explanatory example, mainly to parts different from the first embodiment. Fig. 6 is a side view showing the second explanatory example. It should be noted that the sleeve 6 is omitted in Fig. 6.

In the power transmission structure according to the present explanatory example, an intermediate body (the intermediate member or the bolt) is not arranged between an output shaft 503 and a screw shaft 504. A flat end surface 503f is formed on an end of the output shaft 503. A curved surface 507s protruding toward the end surface 503f of the output shaft 503 is formed on an end of the screw shaft 504. The curved surface 507s protrudes along the axial direction E. The curved surface 507s is formed in a semi-spherical shape.

(Effect)

The power transmission structure according to the present explanatory example is provided with the output shaft 503 rotated by the rotational force transmitted from the motor 21, the screw shaft 504 attached with the screw for mixing the material, and the cylindrical sleeve 6 for transmitting the rotational force of the output shaft 503 to the screw shaft 504, the cylindrical sleeve 6 being attached to an outer circumference of the end of the output shaft 503 and an outer circumference of the end of the screw shaft 504. The output shaft 503 and the screw shaft 504 are splined to the sleeve 6, an axis line of the output shaft 503 and an axis line of the screw shaft 504 are positioned on the same straight line, and the curved surface 507s protruding toward the end of the output shaft 503 (the end surface 503f) is formed on the end of the screw shaft 504.

In this configuration, since the strain gauge 8 is attached to the sleeve 6 so as to measure the strain on the sleeve 6, it is possible to measure the torque imposed on the screw shaft 504. The curved surface 507s protruding toward the end of the output shaft 503 is formed on the end of the screw shaft 504. A contact area between the output shaft 503 and the screw shaft 504 is small. Therefore, in comparison with a case where the flat end surface of the output shaft is brought into contact with the flat end surface of the screw shaft, it is possible to reduce the friction torque generated between the output shaft 503 and the screw shaft 504.

As mentioned above, since the measurement loss due to the friction torque is reduced, it is possible to accurately measure the torque imposed on the screw shaft 504.

In the present explanatory example, the intermediate body is not used. Therefore, even in a case where the conventional power transmission structure is processed and used, there is no need for determining shaft length in consideration of length of the intermediate body.

It should be noted that the curved surface may be formed on the output shaft. The curved surfaces protruding toward the other shaft may be formed on the ends of both the output shaft and the screw shaft.

(Third explanatory example)

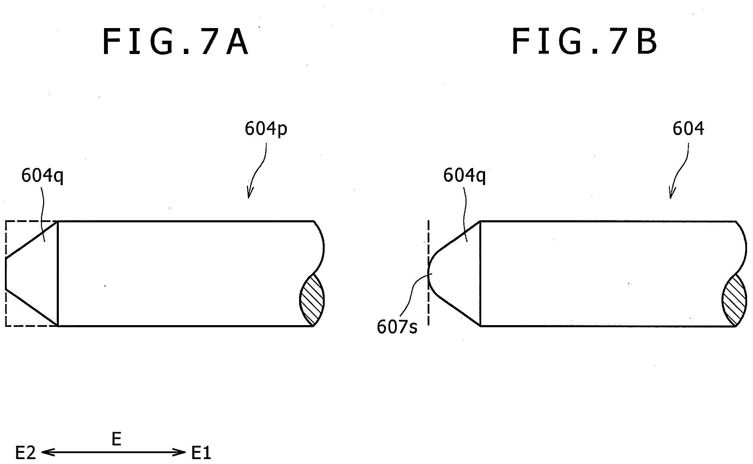

Next, a description will be given to a third explanatory example, mainly to parts different from the first embodiment. Fig. 7 is a side view of a screw shaft according to the third explanatory example: Fig. 7A shows a state after a first processing process; and Fig. 7B shows a state after a second processing process. It should be noted that the sleeve 6 is omitted in Fig. 7.

The power transmission structure according to the present explanatory example is configured in the similar way as the second explanatory example. However, a shape of an end of a screw shaft 604 is different from a shape of the end of the screw shaft 504. In the present explanatory example, too, the intermediate body is not arranged between the output shaft and the screw shaft 604. A flat end surface is formed on the end of the output shaft. A side surface 604q and a curved surface 607s are formed on the end of the screw shaft 604. The curved surface 607s protrudes toward the end surface of the output shaft along the axial direction E.

A description will be given to a formation method of the end of the screw shaft 604. Firstly, the end of the shaft before processing is chamfered over the entire periphery (the first processing process). Thereby, a screw shaft 604p is formed (refer to Fig. 7A). The side surface 604q is formed on an end of the screw shaft 604p. The side surface 604q is formed along a conical surface.

Next, a front end of the screw shaft 604p is processed so as to form a spherical surface, with the result that the curved surface 607s is formed on the front end of the screw shaft 604p (refer to Fig. 7B). In the power transmission structure, the screw shaft may be formed as above.

(Fourth explanatory example)

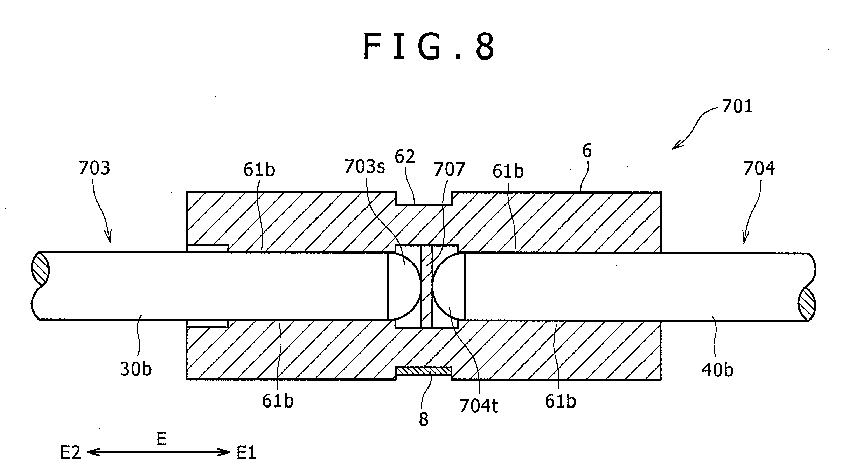

Next, a description will be given to a fourth explanatory example, mainly to parts different from the first embodiment. It should be noted that the same parts as the above embodiment will be given the same reference numerals in the drawings and a description of the parts will be omitted. Fig. 8 is a schematic sectional view of a power transmission structure according to the fourth explanatory example.

In a power transmission structure 701 according to the present explanatory example, a plate shape member 707 is provided inside the sleeve 6, and the plate shape member 707 is sandwiched between an output shaft 703 and a screw shaft 704.

A curved surface 703s protruding toward the plate shape member 707 is formed on an end of the output shaft 703. A curved surface 704t protruding toward the plate shape member 707 is formed on an end of the screw shaft 704. The curved surface 703s and the curved surface 704t protrude along the axial direction E. The curved surface 703s and the curved surface 704t are formed in a semi-spherical shape.

(Effect)

The power transmission structure according to the present explanatory example is provided with the output shaft 703 rotated by the rotational force transmitted from the motor 21, the screw shaft 704 attached with the screw for mixing the material, the cylindrical sleeve 6 for transmitting the rotational force of the output shaft 703 to the screw shaft 704, the cylindrical sleeve 6 being attached to an outer circumference of the end of the output shaft 703 and an outer circumference of the end of the screw shaft 704, and the plate shape member 707 sandwiched between the output shaft 703 and the screw shaft 704 inside the sleeve 6. The output shaft 703 and the screw shaft 704 are splined to the sleeve 6, an axis line of the output shaft 703 and an axis line of the screw shaft 704 are positioned on the same straight line, and the curved surface 703s and the curved surface 704s protruding toward the plate shape member 707 are formed on the end of the output shaft 703 and the end of the screw shaft 704 respectively.

In this configuration, since the strain gauge 8 is attached to the sleeve 6 so as to measure the strain on the sleeve 6, it is possible to measure the torque imposed on the screw shaft 704. The plate shape member 707 is sandwiched between the output shaft 703 and the screw shaft 704, and the curved surface 703s and the curved surface 704t protruding toward the plate shape member 707 are formed on the end of the output shaft 703 and the end of the screw shaft 704 respectively. A contact area between the plate shape member 707, and the output shaft 703 or the screw shaft 704 is small. Therefore, in comparison with a case where the flat end surface of the output shaft is brought into contact with the flat end surface of the screw shaft, it is possible to reduce the friction torque generated between the output shaft 703 and the screw shaft 704.

As mentioned above, since the measurement loss due to the friction torque is reduced, it is possible to accurately measure the torque imposed on the screw shaft 704. It should be noted that the plate shape member may be formed integrally with the sleeve.

(Working Examples)

Next, a description will be given to working examples of the power transmission structure according to the present invention. Here, a power transmission structure for a conventional two-shaft mixer/extruder 901t is taken as a comparative example, and calculation results for degrees of the friction torque generated between the output shaft and the screw shaft in the power transmission structure of the present invention will be shown. Alternatively, here, calculation results for the power transmission structures according to the first embodiment of the present invention and the first explanatory example will be shown.

An effect of reducing the friction torque in the power transmission structure of the present invention can be calculated as mentioned below based on the Hertz contact theory with using the contact area between the output shaft and the screw shaft, a load imposed on the screw shaft (the thrust force) and a rotation radius around the axis line.

It should be noted that in the following calculation, a "contact surface between the output shaft and the screw shaft" indicates: the end surface 903f and the end surface 904f for the conventional power transmission structure; and (i) a contact part (the point 7p) between the spherical body and the screw shaft (or between the spherical body and the output shaft) for the power transmission structure of the present invention or (ii) a contact part (the point 407p) between the output shaft and the bolt for the power transmission structure of the explanatory example.

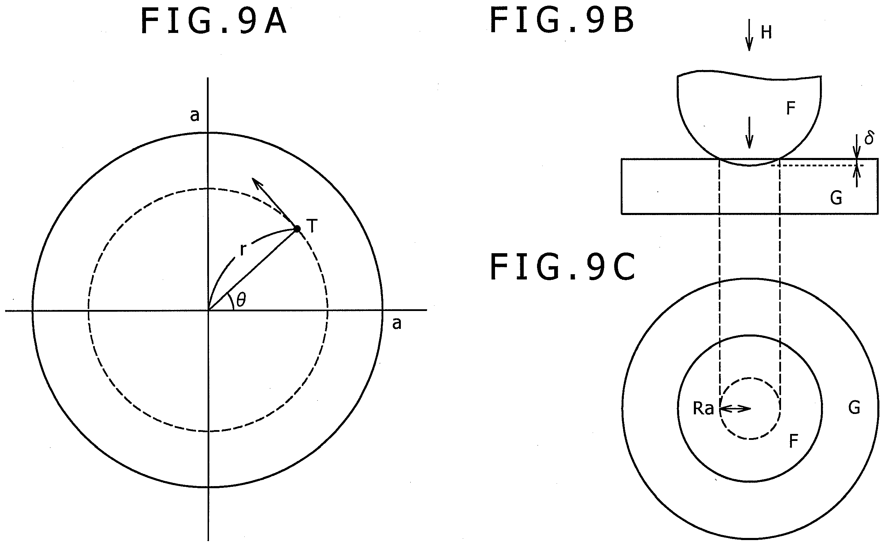

Fig. 9 is a supplementary illustrative view for the calculation of the working examples. A circle having a radius a in Fig. 9A indicates the contact surface between the output shaft and the screw shaft. A center of the circle corresponds to a rotational center of the shaft. Pressure P imposed on a minute region T in the contact surface is represented by the following expression based on an axial load (a thrust load) F [N] at the time of operation and a contact area $\pi a^2$.

$$P = F / \pi a^2 \qquad \text{(Expression 1)}$$

In a case where the entire surfaces are brought in contact, P is a fixed value irrespective of a position of the minute region.

Here, the friction torque serving as resistance against the rotation force of the shaft in the minute region is considered to be proportional to the product of the axial load F [N] and a radius r [mm] (the torque). In this case, entire friction torque $T_P$ [N·mm] is represented by the following expression. This is the friction torque for the comparative example.

[Numerical Expression 1]

$$T_p = \mu \frac{F}{\pi a^2} \cdot \int_0^{2\pi} \int_0^a r \cdot r \, dr \, d\theta \qquad \text{(Expression 2)}$$

$\mu$: Friction coefficient

In a case of contact at the point in a state that the pressure is distributed over the spherical surface, entire friction torque Tc [N·mm] is represented by the following expression based on the same point of view as above. This is the friction torque for the power transmission structure of the present invention.

[Numerical Expression 2]

$$T_C = \mu P_{max} \cdot \int_0^{2\pi} \int_0^a \sqrt{1 - \frac{r^2}{a^2}} \cdot r \cdot r \, dr \, d\theta \qquad \text{(Expression 3)}$$

$P_{max}$: Maximum pressure [Pa]

(Calculation Conditions)

Hereinafter, calculation conditions of power transmission structures A1, A2 and A3 according to the present invention and the explanatory example will be listed in addition to calculation conditions of power transmission structures P1 and P2 according to the comparative example. A1 and A2 correspond to the power transmission structure 1 according to the first embodiment of the present invention, and A3 corresponds to the power transmission structure according to the first explanatory example. P1 is the comparative example for A1 and A3, and P2 is the comparative example for A2. It should be noted that the "shaft" means the output shaft and the screw shaft. A "predicted thrust load" means a load predicted to be actually generated. The "thrust load" serving as the calculation condition is set to be a value around this predicted thrust load.

A1: First Embodiment

Shaft radius: 12 [mm]
Radius R of spherical body: 9 [mm]
Radius Ra of recess portion of shaft end: R $\times$ 1.025 = 9.225 [mm]
Thrust load: 47000 [N]
(Predicted thrust load: 47033 [N])

A2: First Embodiment

Shaft radius: 20 [mm]
Radius R of spherical body: 19 [mm]
Radius Ra of recess portion of shaft end: R $\times$ 1.025 = 19.475 [mm]
Thrust load: 461000 [N]
(Predicted thrust load: 461233 [N])

A3: First explanatory example

Shaft radius: 12 [mm]
Radius R of bolt head portion: 100 [mm]
Thrust load: 47000 [N]
(Predicted thrust load: 47033 [N])

P1: Comparative Example (conventional power transmission structure)

Shaft radius: 12 [mm]

P2: Comparative Example (conventional power transmission structure)

Shaft radius: 20 [mm]

(Calculation Results)

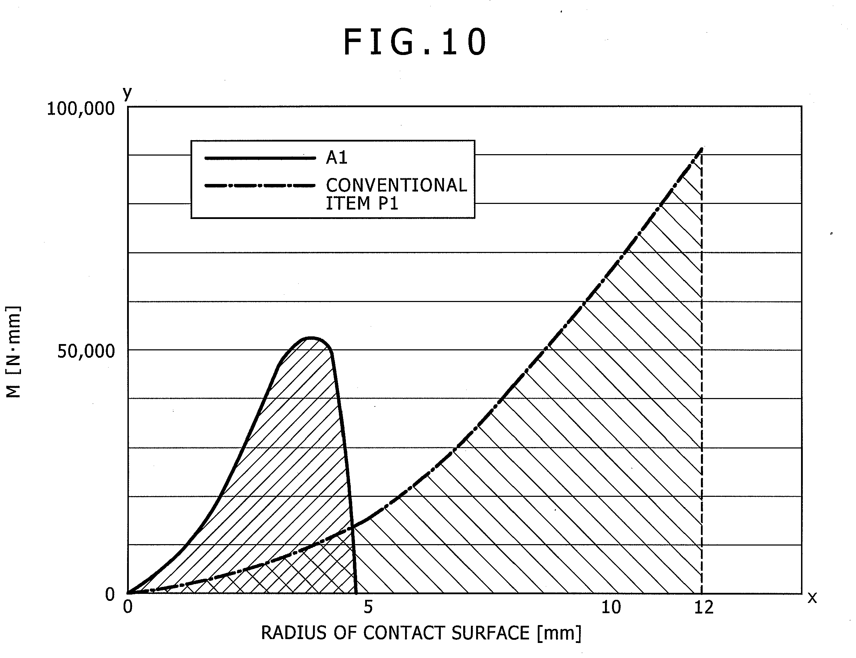

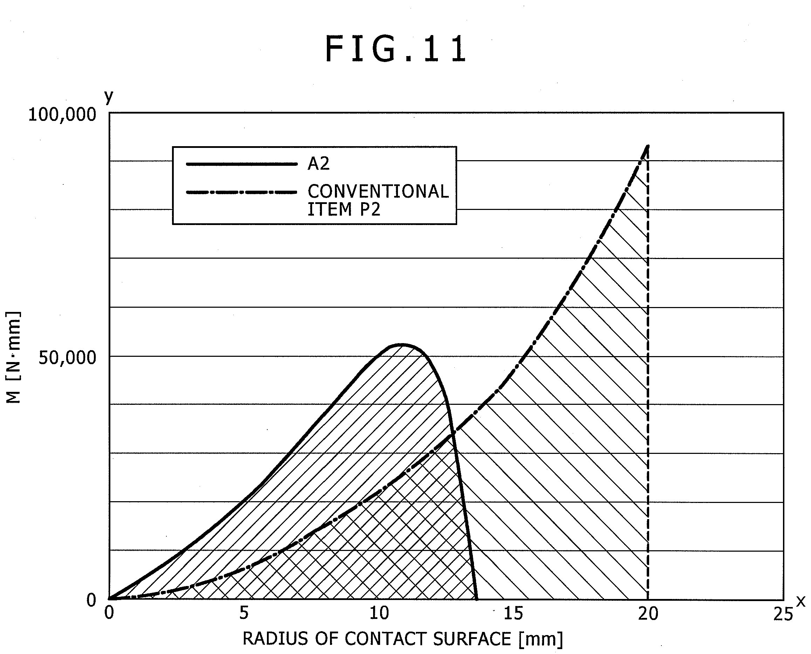

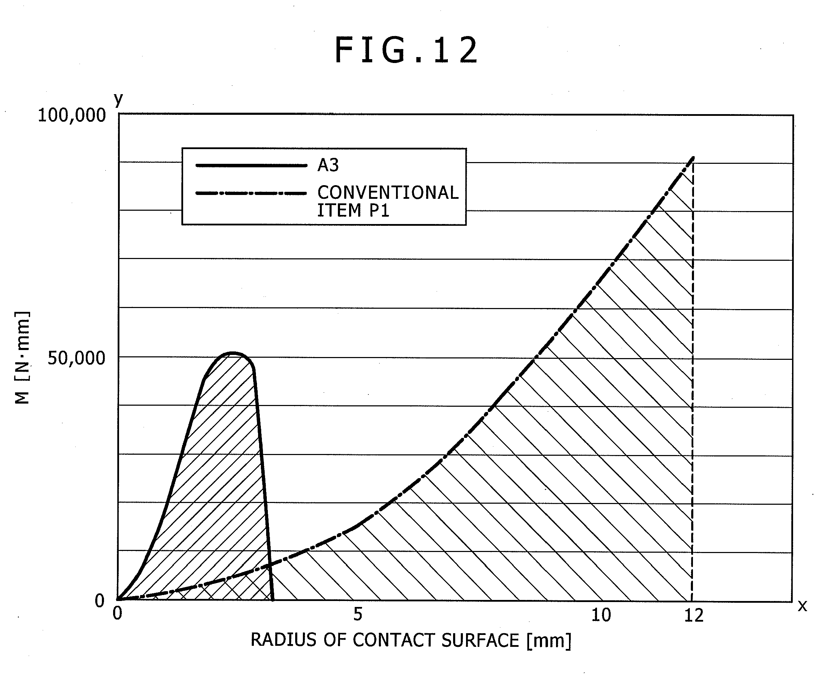

Results from the calculation by using the above expressions under the calculation conditions will be shown in the following and Figs. 10 to 12. Fig. 10 is a graph showing the calculation result of the working example A1. Fig. 11 is a graph showing the calculation result of the working example A2. Fig. 12 is a graph showing the calculation result of the working example A3. It should be noted that a value of M on the vertical axis in Figs. 10 to 12 indicates a value of the friction torque $T_C$ of Expression (3) (or the friction torque $T_P$ of Expression (2)) in a case where $\mu = 1$. Therefore, when the value of M is converted into the friction torque $T_C$ (or the friction torque $T_P$), there is a need for multiplying the value of M by the friction coefficient $\mu$. In Figs. 10 to 12, an area of a region surrounded by a curved line and the x axis is the total value of M [N·mm] respectively.

A1: First Embodiment

Elastic displacement amount ($\delta$): 0.057 [mm]
Radius of contact surface (Ra): 4.593 [mm]
Maximum pressure ($P_{max}$): 905.2 [MPa]
$M_{A1}$ [M value]: 134188 [N·mm]

$$M_{A1}/M_{P1} = about\ 36\ [\%]$$

A2: First Embodiment

Elastic displacement amount ($\delta$): 0.225 [mm]
Radius of contact surface (Ra): 13.242 [mm]
Maximum pressure ($P_{max}$): 1236.2 [MPa]
$M_{A2}$ [M value]: 3614299 [N·mm]

$$M_{A2}/M_{P2} = about\ 59\ [\%]$$

A3: First explanatory example

Radius of contact surface (Ra): 3.137 [mm]
Maximum pressure ($P_{max}$): 2281 [MPa]
$M_{A3}$ [M value]: 86838 [N·mm]

$$M_{A3}/M_{P1} = about\ 23\ [\%]$$

P1: Comparative Example

$M_{P1}$ (M value): 376047 [N·mm]

P2: Comparative Example

$M_{P2}$ (M value): 6147128 [N·mm]
As mentioned above, an about 36% and an about 59% reduction in the friction torque can be expected for A1 and A2 relative to the comparative example respectively. An about 23% reduction in the friction torque can be expected for A3 relative to the comparative example.
It should be noted that the pressure of the contact surface (surface pressure) is calculated based on the Hertz contact theory. With regard to this, the elastic displacement amount ($\delta$) and the radius of the contact surface (Ra) can be described with using Figs. 9B and 9C. Fig. 9B is a side view showing a contact part between an object F having a semi-spherical surface and a shaft G, and Fig. 9C is a top view of Fig. 9B (viewed along an arrow H of Fig. 9B). The object F corresponds to the spherical body or the head portion of the bolt, and a curved surface protruding toward an end of the shaft G is formed on the object F. The shaft G corresponds to the output shaft or the screw shaft. A contact region between the object F and the shaft G is the "contact surface", and the radius of the contact surface is Ra (refer to Fig. 9C). As mentioned above, the output shaft and the screw shaft of the present invention are brought in contact with each other "at the point". However, as shown in Figs. 9B and 9C, surfaces of the object F and the shaft G are brought in contact with each other in this contact part here at a minute region.

(Other Embodiments)

Embodiments of the present invention are not limited to the above embodiments. For example, a plurality of the concave splines may be formed inside the sleeve and a plurality of the convex splines may be formed on the output shaft and the screw shaft.

A part having the curved surface 507s on the end of the screw shaft 504 is formed integrally with the screw shaft 504 in the second explanatory example. However, the part may be formed by attaching a separate member to the screw shaft by using an adhesive or the like. This is the same for a part including the curved surface 607s on the end of the screw shaft 604 according to the third explanatory example.

In the power transmission structure 701 according to the fourth explanatory example, a part having the curved surface 704t on the end of the screw shaft 704 is formed integrally with the screw shaft 704 and a part having the curved surface 703s on the end of the output shaft 703 is formed integrally with the output shaft 703. However, these parts may be formed by attaching separate members to the shafts (the screw shaft and the output shaft) by using the adhesive or the like.

**Claims**

1. A power transmission structure (1) for a two-shaft mixer/extruder (1t), comprising:

   an output shaft (3) rotated by rotational force transmitted from a power source (21);
   a screw shaft (4) attached with a screw (49) for mixing a material;
   a cylindrical sleeve (6) for transmitting the rotational force of said output shaft (3) to said screw shaft (4), said cylindrical sleeve (6) being attached to an outer circumference of an end of said output shaft (3) and an outer circumference of an end of said screw shaft (4); and
   an intermediate member (7) sandwiched between said output shaft (3) and said screw shaft (4) inside said sleeve (6), wherein
   said output shaft (3) and said screw shaft (4) are splined to said sleeve (6),
   a curved surface (7s; 107s; 207s; 307s) protruding toward the end of said output shaft (3) and a curved surface (7t; 107t; 207t; 307t) protruding toward the end of said screw shaft (4) are formed on said intermediate member (7), **characterized in that**
   an axis line of said output shaft (3) and an axis line of said screw shaft (4) are positioned on a same straight line, and
   a recess portion (32) is formed on the end of the output shaft (3) and a recess portion (42) is formed on an end of the screw shaft (4), wherein surfaces of the recess portions (32, 42) are formed in a semi-spherical shape as a part of a spherical surface having a radius (Ra), wherein radii (R) of the curved surfaces (7s, 7t; 107s, 107t; 207s, 207t; 307s, 307t) are smaller than the radii ($R_a$) of the surfaces of the recess portions (32, 42), or wherein the ends of the output shaft (3) and the screw shaft (4) are flat surfaces.

2. A two-shaft mixer/extruder (1t), comprising:

   two of the power transmission structures (1) according to claim 1, wherein
   a strain sensor (8) is arranged on an outer circumference of said sleeve (6).

**Patentansprüche**

1. Leistungsübertragungsaufbau (1) für einen Zweiwellenmischer/-extruder (1t), mit:

   einer Ausgangswelle (3), die durch eine Rotationskraft rotiert wird, die von einer Leistungsquelle (21) übertragen wird;
   einer Schraubenwelle (4), die mit einer Schraube (49) zum Mischen eines Werkstoffs angebracht ist;
   einer zylindrischen Hülse (6) zum Übertragen der Rotationskraft von der Ausgangswelle (3) auf die Schraubenwelle (4), wobei die zylindrische Hülse (6) an einem Außenumfang eines Endes der Ausgangswelle (3) und einem Außenumfang eines Endes der Schraubenwelle (4) angebracht ist; und
   einem Zwischenbauteil (7), das zwischen der Ausgangswelle (3) und der Schraubenwelle (4) innerhalb der Hülse (6) angeordnet ist, wobei
   die Ausgangswelle (3) und die Schraubenwelle (4) mit der Hülse (6) kerbverzahnt sind,

eine gekrümmte Fläche (7s; 107s; 207s; 307s), die in Richtung des Endes der Ausgangswelle (3) vorsteht, und eine gekrümmte Fläche (7t; 107t; 207t; 307t), die in Richtung des Endes der Schraubenwelle (4) vorsteht, an dem Zwischenbauteil ausgebildet sind, **dadurch gekennzeichnet, dass** eine Achsenlinie der Ausgangswelle (3) und eine Achsenlinie der Schraubenwelle (4) auf derselben Geraden positioniert sind, und

ein Vertiefungsabschnitt (32) an dem Ende der Ausgangswelle (3) ausgebildet ist und ein Vertiefungsabschnitt (42) an einem Ende der Schraubenwelle (4) ausgebildet ist, wobei Flächen der Vertiefungsabschnitte (32, 42) in einer halbkugelförmigen Form als ein Teil einer kugelförmigen Fläche mit einem Radius (Ra) ausgebildet sind, wobei Radien (R) der gekrümmten Flächen (7s, 7t; 107s, 107t; 207s, 207t; 307s, 307t) kleiner als die Radien (Ra) der Flächen der Vertiefungsabschnitte (32, 42) sind,

oder wobei die Enden der Ausgangswelle (3) und der Schraubenwelle (4) flache Flächen sind.

**2.** Zweiwellenmischer/-extruder (1t) mit:

zwei der Leistungsübertragungsaufbauten (1) gemäß Anspruch 1, wobei ein Dehnungssensor (8) an einem Außenumfang der Hülse (6) angeordnet ist.

## Revendications

**1.** Structure de transmission de puissance (1) pour un mélangeur / extrudeuse à deux arbres (1t), comprenant :

un arbre de sortie (3) entraîné en rotation par une force de rotation transmise à partir d'une source de puissance (21) ;
un arbre à vis (4) fixé avec une vis (49) pour mélanger un matériau ;
un manchon cylindrique (6) pour transmettre la force de rotation dudit arbre de sortie (3) audit arbre à vis (4), ledit manchon cylindrique (6) étant fixé à une circonférence externe d'une extrémité dudit arbre de sortie (3) et une circonférence externe d'une extrémité dudit arbre à vis (4) ; et
un élément intermédiaire (7) pris en sandwich entre ledit arbre de sortie (3) et ledit arbre à vis (4) à l'intérieur dudit manchon (6), dans laquelle :

ledit arbre de sortie (3) et ledit arbre à vis (4) sont assemblés par cannelure audit manchon (6),
une surface incurvée (7s ; 107s ; 207s ; 307s) faisant saillie vers l'extrémité dudit arbre de sortie (3) et une surface incurvée (7t ; 107t ; 207t ; 307t) faisant saillie vers l'extrémité dudit arbre à vis (4) sont formées sur ledit élément intermédiaire (7), **caractérisée en ce que** :

une ligne d'axe dudit arbre de sortie (3) et une ligne d'axe dudit arbre à vis (4) sont positionnées sur une même ligne droite ; et
une partie d'évidement (32) est formée sur l'extrémité de l'arbre de sortie (3) et une partie d'évidement (42) est formée sur une extrémité de l'arbre à vis (4), dans laquelle les surfaces des parties d'évidement (32, 42) sont formées selon une forme semi-sphérique comme faisant partie d'une surface sphérique ayant un rayon (Ra), dans laquelle les rayons (R) des surfaces incurvées (7s, 7t ; 107s, 107t ; 207s, 207t ; 307s, 307t) sont inférieurs aux rayons ($R_a$) des surfaces des parties d'évidement (32, 42),

ou bien dans laquelle les extrémités de l'arbre de sortie (3) et de l'arbre à vis (4) sont des surfaces plates.

**2.** Mélangeur / extrudeuse à deux arbres (1t) comprenant :
deux des structures de transmission de puissance (1) selon la revendication 1, dans lequel :
un capteur de déformation (8) est agencé sur une circonférence externe dudit manchon (6).

# FIG.1

EP 2 179 834 B1

# FIG.2

EP 2 179 834 B1

# F I G . 3

EP 2 179 834 B1

FIG.4A

FIG.4B

FIG.4C

FIG.4D

## FIG.5A

## FIG.5B

# FIG.6

EP 2 179 834 B1

# FIG.7A

604p

604q

# FIG.7B

604

604q

607s

E
E1
E2

# FIG.8

# FIG.9A

# FIG.9B

# FIG.9C

# FIG.10

RADIUS OF CONTACT SURFACE [mm]

EP 2 179 834 B1

# FIG.11

EP 2 179 834 B1

# FIG.12

A3
CONVENTIONAL ITEM P1

M [N·mm]

100,000

50,000

0

RADIUS OF CONTACT SURFACE [mm]

0    5    10    12

FIG.13

EP 2 179 834 B1

# FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5874682 A
- DE 102005061936 A1
- AU 2007277971 A1
- CH 444470 A
- JP 62127517 A